(19) Europäisches Patentamt
European Patent Office
Office européen des brevets

(11) Publication number: 0 214 507 B1

(12) EUROPEAN PATENT SPECIFICATION

(45) Date of publication of patent specification: 15.01.92

(51) Int. Cl.[5]: C08K 5/34, C08K 5/35, C08K 5/13, C08K 5/20

(21) Application number: 86111394.2

(22) Date of filing: 18.08.86

# (54) Outdoor films stabilized against chemical attack.

(30) Priority: 10.09.85 US 774262

(43) Date of publication of application:
18.03.87 Bulletin 87/12

(45) Publication of the grant of the patent:
15.01.92 Bulletin 92/03

(84) Designated Contracting States:
AT BE CH DE FR GB IT LI LU NL SE

(56) References cited:
EP-A- 0 013 665
GB-A- 978 090
US-A- 4 331 586

KUNSTSTOFFE, vol. 74, no. 10, October 1984, pages 620-624, München, DE; Dr. F. GUGUMUS: "Lichtschutzmittel"

(73) Proprietor: AMERICAN CYANAMID COMPANY
1937 West Main Street P.O. Box 60
Stamford Connecticut 06904-0060(US)

(72) Inventor: Tucker, Robert J.
216 Seymour Road
Hackettstown New Jersey 07840(US)

(74) Representative: Wächtershäuser, Günter, Dr.
Tal 29
W-8000 München 2(DE)

EP 0 214 507 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

Background of the invention

The present invention relates to thermoplastic shaped articles for outdoor use, such as outdoor films, awnings, camper tops, stadium seats, large storage containers for grain, and the like, which are resistant to degradation by sunlight, oxygen and moisture and which exhibit retained weather resistance upon exposure to certain active halogen- and/or sulfur-containing environmental chemicals, such as agricultural chemicals, pool chemicals and the like. More particularly, it relates to a new and improved stabilizer package resistant to chemical attack comprising a unique blend of a specific hindered amine light stabilizer and a U.V. absorber which retains stabilizing activity upon exposure to environmental chemicals, and to new and improved compositions and outdoor articles incorporating same.

Outdoor articles and particularly outdoor films comprising thermoplastic polymers are known and are used in a variety of outdoor applications. Illustrative outdoor uses include: films for greenhouse covers referred to generally as greenhouse films, pool covers, tents, tarps, umbrellas, awnings and similar structures. Polyolefins are the most widely used thermoplastic polymers employed in outdoor applications, primarily because they are less expensive than other thermoplastics and have acceptable physical properties, including good flexibility and elongation characteristics, good vapor permeability characteristics and they can be fashioned to accommodate a wide range of optical preferences, e.g. polyolefin films can be substantially colorless and transparent, tinted and translucent, or colored and opaque. For greenhouse films, substantially colorless and transparent films are desirable or required.

A serious shortcoming of polyolefin materials in outdoor applications is that their weatherability is generally less than satisfactory. More particularly, polyolefin films and shaped articles are susceptible to the degradative effects of exposure to sunlight (i.e. ultra-violet rays), oxygen and moisture, whereby the polyolefin articles yellow or discolor and become brittle upon exposure to the elements after an undesirably short time.

Efforts to improve the weatherability of polyolefins have included the incorporation of stabilizers such as light stabilizers, UV absorbers and antioxidants and combinations of these additives. The efforts have generally provided shaped articles prepared from these stabilized polyolefins with improved retention of physical properties upon exposure to the elements and longer use lives.

Hindered amine light stabilizers (HALS) comprise a large class of compounds which are used in a variety of thermoplastic polymer compositions to provide stability against the action of light, moisture and oxygen. Many hindered amine light stabilizers are derivatives of hindered amines having as a basic structure:

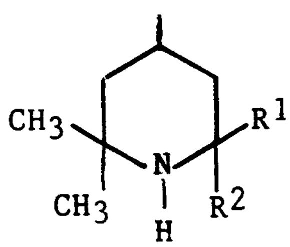

wherein $R^1$ and $R^2$ may be the same or different and represent a $C_1$-$C_4$ alkyl group. Of particular interest is 2,2,6,6-tetramethylpiperidine and its derivatives. A number of different hindered amine light stabilizers are described in the patent literature and are available commercially. See, for example, U.S. 3,640,928; U.S. 4,265, 805; and U.S. 4,293,467.

Special mention is made of the oligomeric hindered amine light stabilizers described by Hardy in U.S. 4,331,586, assigned to same assignee as the present invention. A disclosed therein novel oligomers of the formula:

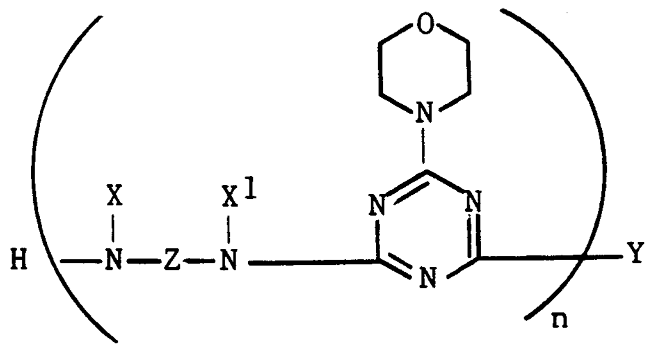

wherein at least one of X and $X^1$ is a piperidinyl moiety of the formula:

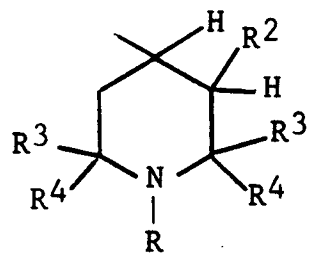

are effective light stabilizers for polymers, preferably polyolefins, and especially preferably polypropylene.

The hindered amine light stabilizers, it has been discovered, stabilize polymers such as polyolefins, against photodegradation by a cyclic mechanism wherein the active light stabilizer is regenerated. This cyclic mechanism provides polymers stabilized with HALS with extended use lives rendering them useful in outdoor applications.

An important outdoor application for a stabilized thermoplastic film is as a greenhouse film. The hindered amine light stabilizers as a group were thought to possess an additional advantage for these applications because they provide a substantially, colorless film. Other known stabilizers, such as those based on nickel compounds, impart a color to the film rendering them less suitable for use as greenhouse covers or films.

It was surprising to find that when a HALS-stabilized polyolefin film was employed as a greenhouse film a premature failure of the film occurred, apparently from light-induced degradation. The problem was perplexing because, for many outdoor applications, the HALS-stabilized materials performed as well as or exceeded expectations. The premature failure of the HALS stabilized greenhouse films were serious enough for food growers, particularly in Europe, to stop using films stabilized with HALS, and to employ less then desirable nickel-stabilized films.

After careful study, it was discovered that the reason why the HALS stabilized materials performed well in some outdoor applications but not in others, and particularly not in agricultural settings, was related to the other chemicals which the films were exposed to, rather than to the films themselves. More particularly, it was discovered that HALS stabilized compositions were susceptible to environmental chemical attack, which caused the stabilizers to lose their effectiveness.

As used herein, and in the claims, the term "environmental chemicals" refers to any chemicals used in outdoor environments which cause a premature loss of effectiveness of most hindered amine type light stabilizers. Environmental chemicals are generally characterized by chemicals having active halogen and/or active sulfur groups, such as chemicals used in and around pools, and in agricultural settings.

By way of illustration, most agricultural chemicals, such as fungicides, herbicides, insecticides, plant-growth substances and the like, contain active halogen and/or active sulfur functionalities. For example, the following fungicides are mentioned, with common names being set off in parentheses:

a. quinone types, such as 2,3,5,6-tetrachloro 1,4-benzoquinone (chloranil); 2,3-dichloro-1,4-napthoquinone (docklone);

b. organic sulfur types, such as, tetramethylthiuram disulfide; ferric dimethyldithiocarbamate (ferbam); disodium ethylenebisdithiocarbamate (nabam);

c. trichloromethylthiocarboximide types, such as N-(trichloromethylthio)-4-cyclohexene-1,2-dicarboximide (captan); N-(trichloromethylthio) phthalimide (folpet);
d. chlorinated benzene types, such as 2,3,5,6-tetrapentachloronitrobenzene (PCNB); 1,2,4-trichloro-3,5-dinitrobenzene; 1,3,5-trichloro-2,4,6-trinitrobenzene; hexachlorobenzene; 2,6-dichloro-4-nitroaniline (dichloran); 1,4-dichloro-2,5-dimethoxybenzene; tetrachloroisophthalonitrile;
e. oxathiin types, such as, 2,3-dihydro-5-carboranilido-6-methyl-1,4-orathiin (carboxin);
f. benzimidazole types, such as, thiophanate;
g. pyrimidine types, such as, 1-(2,4-dichlorophenyl)-1phenyl-5-pyrimidinemethanol (triarimol); and other fungicide types, such as, 1-isopropylcarbamoyl-3-(3,5-dichlorophenyl)-hydantoin (iprodione); and sodium p-(dimethylamino)benzenediazosulfonate (femaminosulf); 5-ethoxy-3-trichloromethyl 1,2,4-thiadiazole (ethazole).

Illustrative herbicides include:
a. phenoxyalkanoic acid types, such as, (2,4-dichlorophenoxy) acetic acid (2,4-D) and its derivatives;
b. s-triazine types, such as, 2-chloro- and 2-methyl-thio-4, 6-bis(alkylamino)-s-triazines wherein the alkyl group may be used the same or different and includes such groups as $C_2H_5$, $C_3H_7$, $NH(CH_3)_2$, $OCH_3$, $C(CH_3)_3$, $C(CH_3)_2CN$, $(CH_3)_2CH$; examples include (ametryn), i.e., (2-methylthio-4ethylamino-6-iropropylamino-); (atrazine), i.e., (2-chloro-, 4-ethylamino-, 6-isopropylamino-); (simiazine) i.e., (2-chloro-, 4,6-bis[ethylamino]-); (dipropetryn), i.e., (2-ethylthio-, 4,6-bis[$(CH_3)_2C(H)N(H)$)];
c. urea types, such as, 3-(p-chlorophenyl)-1,1-dimethylurea (monuron).
d. carbamate types such as, isopropyl m-chlorocarbanilate (chlorpropham); $C_6H_5NHCOOCH_2C = CCH_2C1$ (barban);

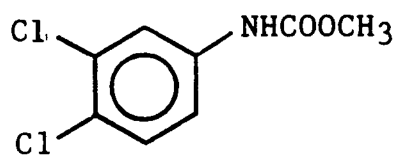

(swep),

1,3-dichlorobenzyl methyl carbamate (dichlorate);
e. thiocarbamate types, such as, S-ethyl dipropylthiocarbamate (EPTC); sodium methyldithiocarbamate (metham); as well as,
f. herbicide antidotes or safeners, such as, N,N-diallyl-2,2-dichloroacetamide;
g. amide type herbicides, such as, chloroacetamides or those based on substituted anilide structure, such as,

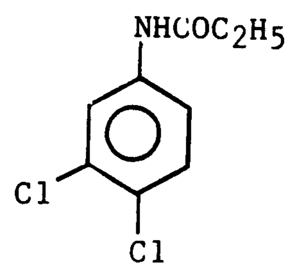

(propanil),

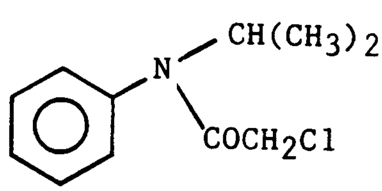

(propachlor);

h. chlorinated aliphatic acid types, such as, trichloroacetic acid (TCA); 2,3,6-trichlorophenylacetic acid (fenac);
i. chlorinated benzoic acid types, such as, 2,3,6-trichlorobenzoic acid (2,3,6-TBA); 2-methoxy-3,6-dichlorobenzoic acid (dicanba); 3-amino-2,5-dichlorobenzoic acid (chloranben); 2,6-dichlorobenzonitrile (dichlobenel);

j. phenol types, such as, 3,5-dibromo-4-hydroxybenzonitrile (bromoxynil); 4-hydroxy-3,5-diiodobenzonitrile (ioxynil);

k. substituted dinitroaniline types, such as,

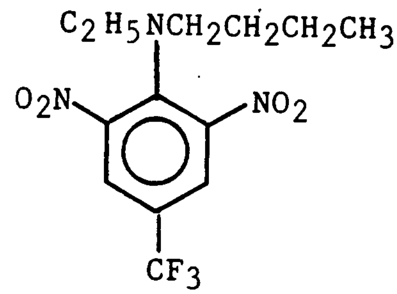

(benefin);

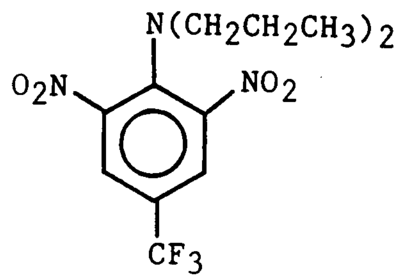

(trifluralin);

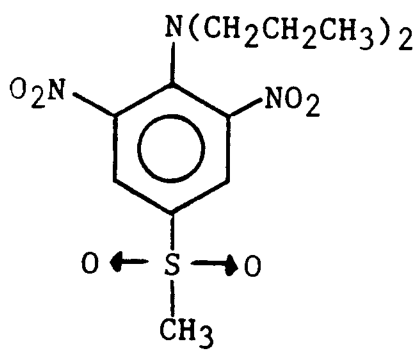

(nitralin), as well as,

l. other herbicide types, such as, 4-amino-3,5,6-trichloropicolinic acid (picloran), substituted pyrimidines such as

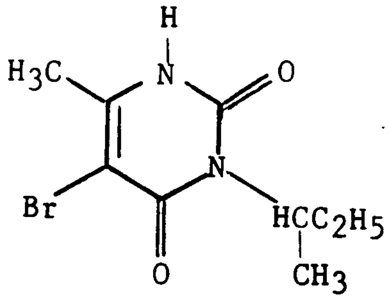

(bromacil);

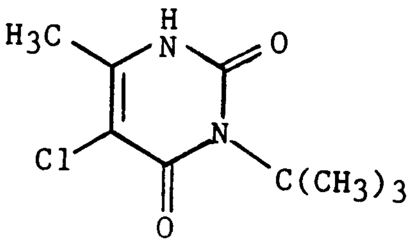

(terbacil),

may be mentioned.

Illustrative insecticide environmental chemicals include:

a. halogenated derivatives of pyrethroids i.e., synthetic pyrethroids, such as (3-phenoxyphenyl) methyl (+) cis-trans 3-(2,2-dichloroethenyl)-2,2-dimethylcyclopropanecarboxylate;

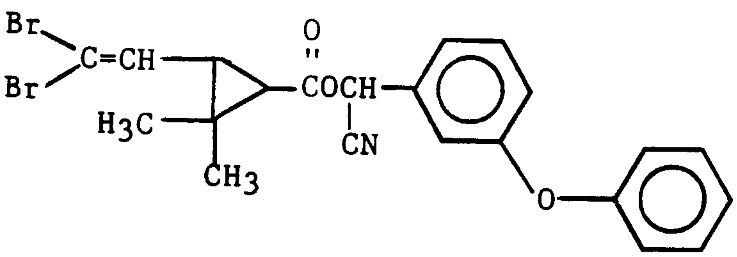

(decamethrin)

b. organothiocyanates, such as, 2-(2-butoxyethoxy) ethyl thiocyanate;

c. DDT its derivatives and analogues, such as, 1,1,1-trichloro-2,2-bis(p-chlorophenyl)ethane (DDT); 1,1-chloro-2,2-bis-(p-chlorophenyl) ethane (DDD); 1,1,1-trichloro-2,2-bis(p-methoxyphenyl) ethane (methoxychlor);

d. chlorinated cycloaliphatics, such as, 1,2,3,-4,5,6-hexachlorocyclohexane (bindane);

e. chlorinated terpenes, such as, toxaphene whose most active ingredients are 2,2,5-endo-6-exo-8,9,10-heptachlorobornam and 2,2,5-endo-6-exo-8,9,10-octachlorobornane;

f. cyclodienes, such as, (chlordane) which comprises the two isomers 2,3,4,5,6,7,8,8-octachloro-2,3,3a,-4,7,7a-hexahydro-4,7-methanoindene, 2-trans and b-cis; (heptachlor) i.e., 1,4,5,6,7,8,8-heptachloro-3a,4,7,7a-tetrahydro-4,7-methanonindene; (telodrin) i.e., 1,3,4,5,6,7,-8,8-octachloro-3a,4,7,7a-tetrahydro-4,7-methanophthalam; (endrin) i.e., 1,2,3,4,10,10-hexachloro-6,7-epoxy-1,4,4a,5-6,7,8,8a-tetrahydro-1,4-endo, endo-5,8-dimethanonaphthalene; (endosulfan) i.e., 6,7,8,9,10,10-hexachloro-1,5,5a,6,9,9a-hexahydro-6,9-methane-2,4,3-benzodioxathiepin-3-oxide; (mirex) i.e., 1,2,3,4,5,5,6,7,8,9,10,10-dodecachlorooctahydro-1,3,4-methane-2H-cyclobuta-[c,d]-pentalene;

g. organophosphorous compounds, such as tetraethyl dithionopyrophosphate (sulfotexy); O,O-diethyl-O-(p-nitrophenyl) phosphorothionate (parathion);O,O-dimethyl-O-(p-nitrophenyl) phosphorothionate (methyl parathion); O-(2-chloro-4-nitrophenyl)-O,O-dimethyl phosphorothionate (dicapthon); O,O-dimethyl-O-(3-methyl-4-methylthiophenyl) phosphorothionate (fenthion); O,O-dimethyl-O-(2,4,5-trichlorophenyl)

phosphorothionate (ronnel); O,O-diethyl-O-(3,5,6-trichloro-2-pyridyl) phosphorothionate (chlorpyrifos); O,O,O',O'-tetra-methyl-O,O'-thio-di-p-phenylene) phosphorothionate (temephos); O,O-diethyl-O-(2-isopropyl-4-methylpyrimidyl-6-) phosphorothionate (diayinon); O,O-dimethyl-S-(1,2-dicarbethoxyethyl) phosphorodithioate; 2,3-p-dioxanedithio-S,S-bis(O,O-diethylphosphorodithioate) (dioxathion); S-(2-chloro-1-phthalimidoethyl)-O,O-diethyl phosphorothionate; 2-chloro-1-(2,4-dichlorophenyl) vinyl diethyl phosphate (chlorofenvinphos); O-ethyl-S,S-dipropyl phosphorodithioate (prophos); as well as

h. systemic insecticides, such as, bis(dimethylamino) phosphoryl fluoride (dimefox); a mixture of two parts O,O-diethyl and O-(2-ethylthio)-O-ethyl phorphorothionate (demeton); dimethyl-2-chloro-2-diethylcarbamoyl-1-methylvinyl phosphate (phosphamidon); O,O-diethyl-S-(2-(ethylthio) ethyl)-phosphorodithioate (disulfoton); O-ethyl-S-phenyl ethylphosphonodithioate (fonofos);

i. carbamates, such as, S-methyl-N-(methylcarbamoyloxy)thioacetimidate (methomy); S-methyl-l-(dimethylcarbamoyl)-N-(methylcarbamoyl)oxythioformimidate (oxamyl);

j. chitin synthesis inhibitors, such as, 1-(4-chlorophenyl)-3-(2,6-difluorobenzoyl)urea (diflubenzuron);

k. Acaricides, such as, di-(p-chlorophenyl)methylcarbinal or 1,1-bis(p-chlorophenyl)ethanol (chlorfenethiol); ethyl-P,P-dichlorobenzilate (chlorobenzilate); 1,1-bis(p-chlorophenyl)-2,2,2-trichloroethanol (dicofol): 2,4,4',5-tetrachlorodiphenylsufone (tetradifon); p-chlorophenyl-p-chlorobenzenesulfonate (ovex); p-chlorobenzyl-p-chlorophenyl sulfide (chlorbenside); bis(pentachloro-2,4-cyclopentadien-l-yl (pentac);

l. fumigants, such as methyl bromide, carbon tetrachloride; 1,2-dibromo-3-chloropropane; 1,2-dichloropropane; ethylene chlorobromide; ethylene dibromide; ethylene dichloride;

m. repellants, such as,

$$(CH_3)_2N\underset{\overset{\|}{S}}{C}SSCN(CH_3)_2 \text{ (thiram); and}$$

disodium ethylenebisdithiocarbamate (nabam).

Illustrative plant growth substances include:

3-acetyl-4-thiazolidinecarboxylic acid (foleisteine); 1-allyl-1-(3',7'-dimethyloctyl)piperidinium bromide (piproctamy bromide); 5-chloro-3-methyl-4-nitro-1H-pyrazole; 3-(3',4'-dichlorophenyl)-1,1-dimethylurea (duiron); 6,7-dihydrodipyrido[1,2-a:2',1'-c]pyrazineduim dibromide (diguat),

f, methyl 4-aminophenylsulfonylcarbamate (asulam).

g. tributyl-(2,4-dichlorobenzyl)phosphonium chloride (chlorophonium chloride).

Environmental chemicals also include other chemicals used in non-agricultural outdoor uses, such as pool chemicals, disinfectants, bleaching agents and the like which are characterized by active halogen and/or active sulfur functionalities. Illustrative of these other outdoor chemicals are:

a. chloramine compounds, such as trichloroisocyanuric acid; dichloroisocyanuric acid; monochloroisocyanuric acid; 3-chloro-5,5-dimethylhydantoin; N-chlorosuccinimide; N-chloropropionanilide; N-chlorobutyranilide; dichloramine-T; N-chloroacetanilide; N-chloroformanilide; chloramine-T; monochloramine; albuminoid chloramines; N-chlorosulfamic acid; N,N-dichlorosulfamic acid; sodium N-chloroimidodisulfonate; the trichloroimidometaphosphates;

b. hypochlorous acid;

c. glycouril derivatives, such as, 2,4,6,8-tetrachloro-2,4,6,8-tetrazobicyclo (3.3.0)octa-3,7-dione.

d. chlorinated hydantoins, such as, 1,3-dichloro-5,5-dimethylhydantoin;

e. halogen containing heterocyclic nitrogen compounds, such as, 1,3,5-trichloro-2,4-dioxahexahydrotriazine; dichloroazodicarbonamide; derivatives of melamine; N-chlorosulfonamides, chloramine-B; halazone [p-(N,N-dichlorosulfamoyl)benzoic acid]

f. metal hypochlorites of such metals as lithium, calcium, strontium, barium, sodium, potassium, magnesium, silver, and zinc, for example, sodium hypochlorite, calcium hypochlorite, sodium hypochlorite-bisodium phosphate complex;

g. Organic and nonmetal hypochlorites, such as (a) alkyl hypochlorites (esters of hypochlorous acid), for example, tertiary hypochlorites such as t-butyl hypochlorite, (b) inorganic nonmetal hypochlorites, such as $ClNO_2$, $ClOCl_3$ and hypochlorites derived from monobasic fluorine-containing oxyacids of the group VIA elements such as sulfur (S), selenium (Se) and tellurium (Te), for example, $HOSO_2F$, $HOSO_2CF_3$, $HOSF_5$, $HOSeF_5$, and the like, (c) hydroperoxide derivatives, such as, $CF_3OH$, and $SF_5OOH$, and (d) fluoroalkyl hypochlorites, such as, trifluoromethyl hypo-chlorite, $C_2F_5OCl$, $(CH_2F)COCl$;

g. other halogen-containing acids or salts, such as sodium chlorite; chloric acid ($HClO_3$); sodium and

potassium chlorate, perchloric acid and perchlorates, such as, perchlorates of groups Ia, IB, IIA, IIB, iIIA, IIIB, IVA, IVB, VA VB, VIA, VIB, VIIA, VIIB, VIII; and

i. chlorinated hydrocarbons.

Without wishing to be bound by any particular theory, it is believed that the loss of stabilizing ability generally observed in HALS stabilized polyolefin outdoor articles upon exposure to environmental chemicals, arises because the environmental chemicals interfere with the cyclic mehcanism, ordinarily operative in HALS formulations, by which the active stabilizer species is regenerated. This would account for the observed loss in stabilizer activity and subsequent photodegradation of the polymers, observed in outdoor applications associated with environmental chemicals.

Accordingly, it is an object of the present invention to provide a stabilizer system for polymers and articles adapted for outdoor use which exhibits improved resistance to attack by environmental chemicals.

It is further object of the present invention to provide new and improved thermoplastic compositions adapted for forming shaped articles for outdoor use in areas where environmental chemicals are used having improved weatherability and extended use lives.

## Summary of the Invention

Unexpectedly, in view of the foregoing, it has now been discovered that a unique blend of a particular hindered amine stabilizer with a U.V. absorber provides a stabilizer package based on HALS which is substantially resistant to attack by environmental chemicals. More particularly, the present invention provides a new and improved environmental chemicals resistant stabilizer package adapted for use with thermoplastic polymers to form new and improved stabilized thermoplastic compositions for forming shaped articles for outdoor applications.

The new and improved environmental chemicals resistant stabilizer package of the present invention comprises:

(a) a hindered amine light stabilizer comprising an oligomer of the formula

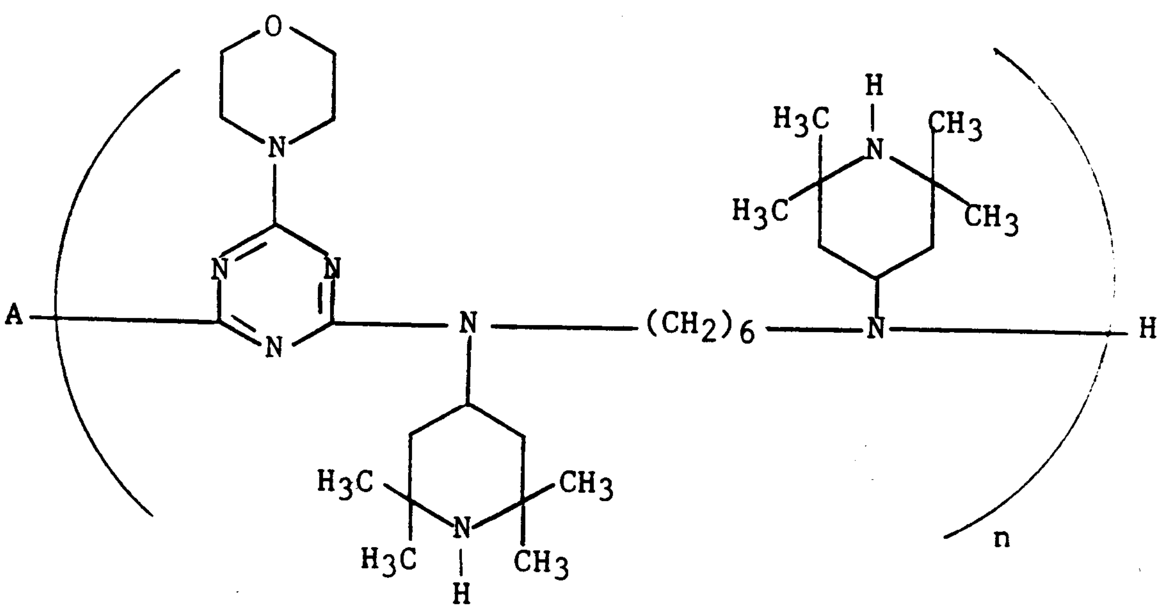

wherein A represents a halogen,$C_1$-$C_8$ alkylamino, di($C_1$-$C_8$)alkylamino, pyrrolidyl or a morpholino group, and n is an integer greater than 1; and

(b) an ultraviolet absorber, wherein the weight ratio of (a) to (b) in said stabilizer package is from about 1:5 to about 5:1, respectively.

The new and improved stabilizer package of the present invention is for use in stabilizing thermoplastic compositions intended to be formed into shaped articles for outdoor use in environments where environmental chemicals are or may be used. In accordance with this embodiment, the present invention provides new and improved stabilized thermoplastic compositions for outdoor use, said compositions comprising:

(a) a thermoplastic polymer normally susceptible to degradation by ultraviolet radiation; and

(b) an ultraviolet stabilizingly effective amount of the environmental chemicals resistant stabilizer package defined above.

In an alternative aspect, the present invention also provides a method for providing improved weatherability and stability against photodegradation in shaped thermoplastic outdoor articles which are exposed to environmental chemicals comprising the steps of providing a thermoplastic composition comprising a thermoplastic polymer and incorporating therein an ultraviolet stabilizingly effective amount of the environmental chemicals resistant stabilizer package of this invention.

In especially preferred embodiments, the present invention provides substantially colorless and transparent polyolefin greenhouse films exhibiting improved weatherability even after exposure to environmental chemicals.

Other objects and advantages of the present invention will become apparent from the following detailed description and illustrative working Examples.

DETAILED DESCRIPTION OF THE INVENTION

In accordance with the present invention there is provided a new and improved environmental chemicals resistant stabilizer package which comprises a unique blend of:

(a) a hindered amine light stabilizer comprising an oligomer of the formula:

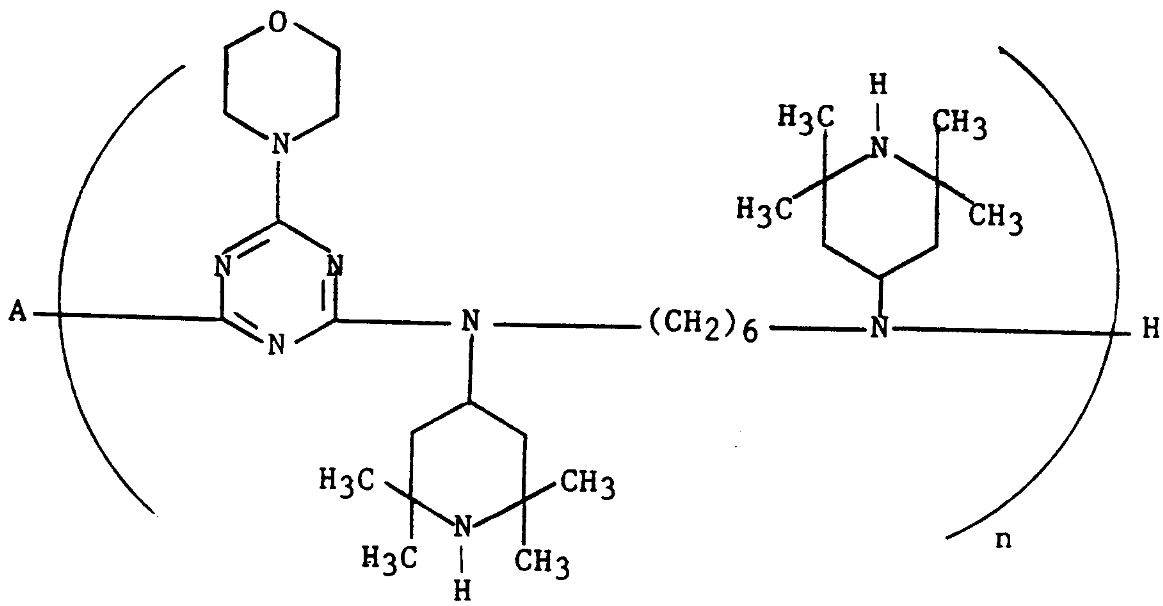

wherein A represents a halogen, $C_1$-$C_8$ alkylamino, di($C_1$-$C_8$ alkylamino, pyrrolidyl or a morpholino group and n is an integer greater than 1; and

(b) an ultraviolet absorber, wherein the weight ration of (a) to (b) in said stabilizer package is from about 1:5 to about 5:1, respectively.

The oligomeric hindered amine light stabilizer component (a) may be prepared by reacting equal molecular proportions of a 2,4-dihalo-6-morpholino-1,3,5-triazine, such as 2,4-dichloro-6-morpholino-1,3,5-triazine or 2,4-dibromo-6-morpholino-1,3,5-triazine, and 4,4'-(hexamethylenediimino)bis(2,2,6,6-tetramethylpiperidine) in an inert solvent in the presence of an organic or inorganic base, at elevated temperature, preferably at the boiling point of the inert solvent. Upon completion of the reaction, the reaction mixture is filtered to separate by-product salts and the solvent is evaporated from the filtrate to obtain a gummy residue. This residue is subsequently extracted in boiling petroleum ether, filtered and recovered from the filtrate upon evaporation of the petroleum ether.

Suitable inert solvents include toluene, xylene and dioxane.

Suitable bases include: alkali metal, e.g. sodium or potassium, hydroxides, carbonates, bicarbonates, as well as triethylamine and tributylamine.

The 2,4-diahalo-6-morpholino-1,3,5-triazine compound may be prepared by reacting one molecular proportion of morpholine hydrochloride with one molecular proportion of a cyanuric halide, preferably cyanuric chloride, in an inert solvent in the presence of an organic or inorganic base, filtering off by-product

salt and recovering the product from the filtrate.

The diamine is generally prepared by reductively alkylating 2,2,6,6-tetramethyl-4-oxopiperidine with hexamethylenediamine and hydrogen in the presence of a precious metal catalyst, such as platinum. Further details on preparation of the oligomeric hindered amine light stabilizers for use herein may be obtained from U.S. 4,331,586.

Especially preferred oligomers include those of the formula wherein A is a morpholino group and n has a value of from 2 to 3 inclusive.

In accordance with the present invention the new and improved environmental chemicals resistant stabilizer package also comprises as component (b) a U.V. absorber. U.V. absorbers are known to those skilled in this art and the U.V. absorbers preferred for use in the stabilizer package of this invention are selected from benzotriazole, benzophenone, acrylate and oxalic acid diamide types. More particularly, suitable substituted benzotriazole U.V. absorbers include 2-(2'-hydroxyphenyl)benzotriazoles and derivatives such as the 5'-methyl-, 3',5'-di-tert.butyl-; 5'-tert.butyl-, 5'-(1,1,3,3,-tetramethylbutyl)-; 5-chloro-3',3'-di-tert.butyl; 5-chloro-3-tert.butyl; 5'-methyl-3'sec.butyl; 5'-tert.butyl; 4'-octoxy; 3',5'-di-tert.amyl derivatives.

Suitable benzophenone type U.V. absorbers include substituted 2-hydroxybenzophenones, such as the 4-methoxy; 4-octoxy; 4-decyloxy; 4-dodecyloxy; 4-benzyloxy; 2,2',4'-trihydroxy and 2'-hydroxy-4,4'-dimethoxy derivatives.

Suitable acrylate U.V. absorbers include: alkyl esters of $\alpha$-cyano-$\beta$, $\beta$-diphenyl-acrylic acid; alkyl esters of carbomethoxy cinnamic acid; alkyl esters of $\alpha$-cyano-$\beta$-methyl-p-methoxycinnamic acid; alkyl esters of $\alpha$-carbomethoxy-p-methoxycinnamic acid; N-($\beta$-carbomethoxy-$\beta$-cyanovinyl)-2-methylindoline.

Suitable oxalic acid dimaine U.V. absorbers include 4,4'-dioctyloxanilide; 2,2'-di-dodecyloxy-5,5'-di-tert.butyloxanilide; 2-ethoxy-2'-ethyl oxanilide; N,N'-bis(3-dimethylaminopropyl)oxalamide;2-ethoxy-2'-ethyl-5-tert.butyloxanilide alone or in admixture with 2-ethoxy-2'-ethyl-5,4'-di-tert.butyl-oxanilide and mixtures of ortho-and para-alkoxy substituted and distributed oxanilides.

The preferred U.V. absorber for use in the stabilizer package of the present invention is 2-hydroxy-4-n-octyloxybenzophenone.

In accordance with the present invention, the new and improved environmental chemicals resistant stabilizer package will comprise the oligomeric hindered amine light stabilizer and U.V. absorber in a weight ratio of from 1:5 to 5:1, respectively preferably from 1:3 to 3:1, respectively and especially preferably, the weight ratio of (a) to (b) in the stabilizer package is from 1:2 to 2:1 respectively. Components (a) and (b) may be admixed in dry form in appropriate proportions to provide the stabilizer package or they may be dissolved in a suitable solvent to provide a liquid additive for spray applications.

The new and improved environmental chemicals resistant stabilizer package of the present invention is useful as a light stabilizer for thermoplastic polymeric substrates intended for outdoor use in areas where environmental chemicals are used. The stabilizer package is useful to stabilize any thermoplastic polymer, normally susceptible to degradation by sunlight and other sources of ultraviolet or actinic radiation. Illustrative thermoplastic polymers include: polyolefins, polyesters, polycarbonates, polyethers, polyurethanes, polystyrenes, high-impact polystyrenes as shaped articles such as films, monofilaments, multifilament yarns and extruded and/or molded articles. In preferred embodiments, the thermoplastic substrate is a polyolefin.

As used herein, the term polyolefin includes homopolymers of alpha olefins such as polyethylene, polypropylene, polybutadiene, polyisoprene, polystyrene; copolymers of alpha olefins such as ethylene-propylene copolymer, ethylene-butylene copolymer, ethylene-vinyl acetate copolymer, styrene-butadiene copolymer; acrylonitrile-butadiene-styrene terpolymers.

Other organic materials susceptible to degradation by the effects of light, the properties of which are improved by the incorporation therein of the environmental chemicals resistant stabilizer package of the present invention, include natural and synthetic rubbers, the latter including, for example, homo-, co- and terpolymers of acrylonitrile, butadiene and styrene, and blends of any of the foregoing.

In accordance with the present invention, new and improved stabilized thermoplastic compositions exhibiting good stability against UV-induced photodegradation upon exposure to environmental chemicals are provided by incorporating into the thermoplastic polymer an ultraviolet stabilizingly effective amount of the environmental chemicals resistant stabilizer package of this invention. Generally, and without limitation, an effective amount of the stabilizer package will comprise from 0.1% to 6.0% by weight, based on total resin solids in said thermoplastic composition. It should be understood that exact amounts may vary depending upon the thermoplastic polymer used, the degree of environmental chemicals resistance and light stability required and the presence or absence of other additives in the composition. Moreover, the amount of the stabilizer package employed should generally be sufficient to provide a total HALS content, i.e. an amount of component (a) in said overall composition, of from 0.05 to 3.0% by weight, based on total

resin solids and a total U.V. absorber content, i.e. an amount of component (b) in said overall composition, of from 0.05 to 3.0% by weight, based on total resin solids.

The improved thermoplastic compositions of the present invention may also include other additives, such as antioxidants, plasticizers, flame retardants, antistatic and antislipping agents, fillers, reinforcing agents, dyes and pigments, all being added in their conventional amounts.

The new and improved environmental chemicals resistant stabilizer package of the present invention may be employed to stabilize thermoplastic substrates by spray or surface coating, but preferably will be incorporated into the thermoplastic substrate by conventional compounding methods. For example, the stabilizer package and optionally other additives may be incorporated into the polymers by dry blending the additives with the substrate in powder or granular form followed by milling, Banbury mixing, molding, casting, extruding and swelling. Alternatively, the stabilizer package may be added as a solution or slurry in a suitable inert solvent or dispersant, to the polymeric substrate in powder or granular, the whole mixed in a mixer and the solvent subsequently removed, or mixed in an extruder, extruded, pelletized and dried. In still another method, the stabilizer package may be added to the polymeric substrate during preparation of the polymer, for example at the latex stage of polymer production, to provide prestabilized polymer material. The stabilizer package may be incorporated in multifilament fibers by dry blending the polymer, stabilizer package and a processing antioxidant to form a blend which is extruded and comminuted into pellets at elevated temperatures.

In an especially preferred embodiment, the present invention provides a substantially colorless, light stable polyolefin greenhouse film comprising:

a vinyl acetate modified low density polyethylene polymer; and

from 0.1 to 6.0% by weight, based on a total resin solids of an environmental chemicals resistant stabilizer package of this invention as defined above wherein in hindered amine component (a) the A group is a morpholino group and n has a value of from 2 to 3 inclusive and the UV absorber component (b) is 2-hydroxy-4-n-octyloxybenzophenone.

Other objects and advantages of the present invention will become apparent from the following working Examples, which are provided by way of illustration, to enable those skilled in the art to better understand and practice the present invention.

Example 1

In the following Example, blown polymer films stabilized with the new and improved stabilizer package of the present invention as well as films stabilized with other closely related stabilisers were compared and tested for stability against photodegradation both before and after repeated exposure to environmental chemicals.

More particularly, stabilized polymer films comprising a 4% by weight vinyl acetate-modified low density polyethylene and a specified amount of the stabilizer selected were dry blended, extruded and chopped to form molding pellets. The molding pellets were placed in a standard blow molding apparatus and the thermoplastic composition was blown into a film in accordance with conventional procedures. Sample sections of the various films of uniform surface area and uniform 0.15 mm (6 mil) thickness were used in all tests.

Light stability of the films was determined by measuring the original % elongation of each sample before exposure by mounting the sample films on an Instron Tester equipped with an extensometer and applying a constant force until the load to yield point was reached noting displacement length of the sample at yield in accordance with standard test methods as set forth in ASTM D-638. Thereafter, the panels were exposed to ultraviolet irradiation using an Atlas Weather-O-Meter 6000 watt Xenon burner at a black panel temperature of 65° ± 2.8° C (149° F ± 5° F) and a relative humidity of 35% on light cycle only. Some of the samples were exposed to an environmental chemical by spraying the back side of the sample film, away from the light source, once a week with a pesticidel solution.

The pesticide used was a typical synthetic pyrethroid, POUNCE® having the active ingredient (3-phenoxyphenyl)methyl (±)cis-trans-3-(2,2-dichloroethylenyl)-2,2-dimethylcyclopropanecarboxylate, e.g.

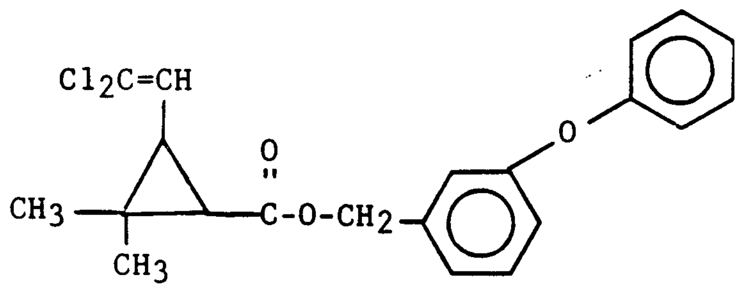

The pesticide treatment solution was prepared by diluting 1.2 mls of POUNCE®, containing 38.4% of the active ingredient, to one liter with distilled water. Fresh pesticide solution was prepared each week.

Film stability was determined by the number of hours of exposure until failure and failure was defined as a loss of 50% in the original % elongation of the samples. Generally, the samples had an original % elongation of about 650-700% and failure was defined after exposure to the ultraviolet source, with or without exposure to the pesticide treatment, as the time it took for the samples to have a measures % elongation after exposure of only 300-350%.

Sample films were prepared which contained the specified amounts of various stabilizers. The following stabilizers were used:

(a) the oligomeric hindered amine stabilizer for the stabilizer package of the present invention, identified as HALS 1 in this example; and having the formula:

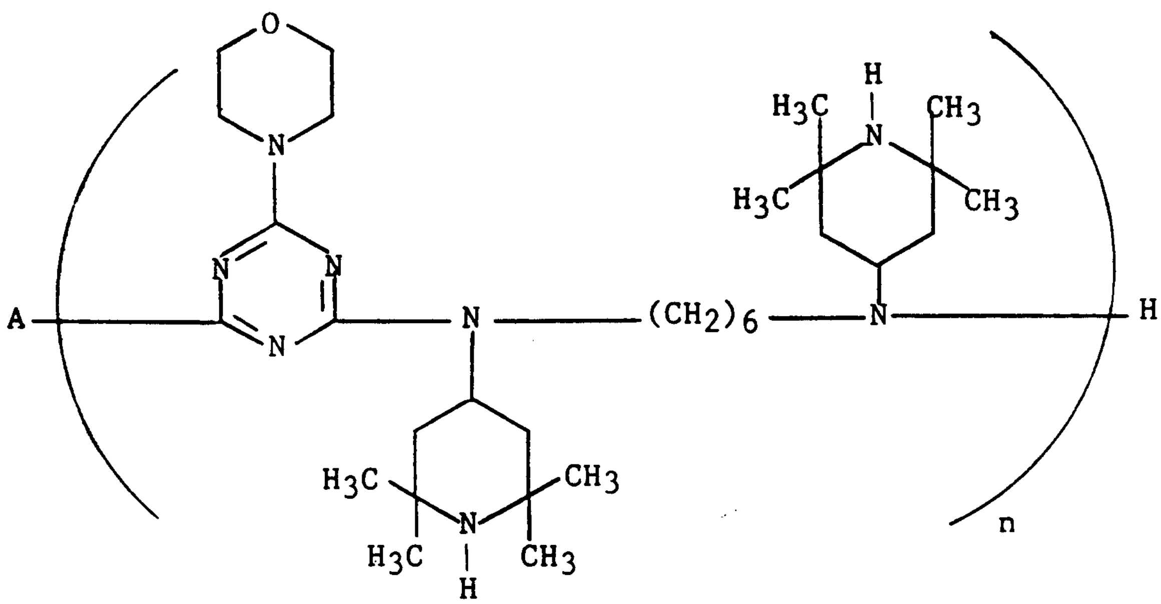

wherein n is greater than 1.

(b) A similar HALS having a tert.octyl substituent instead of the morpholino group on the amino triazine ring, identified as HALS A in this example and having the formula:

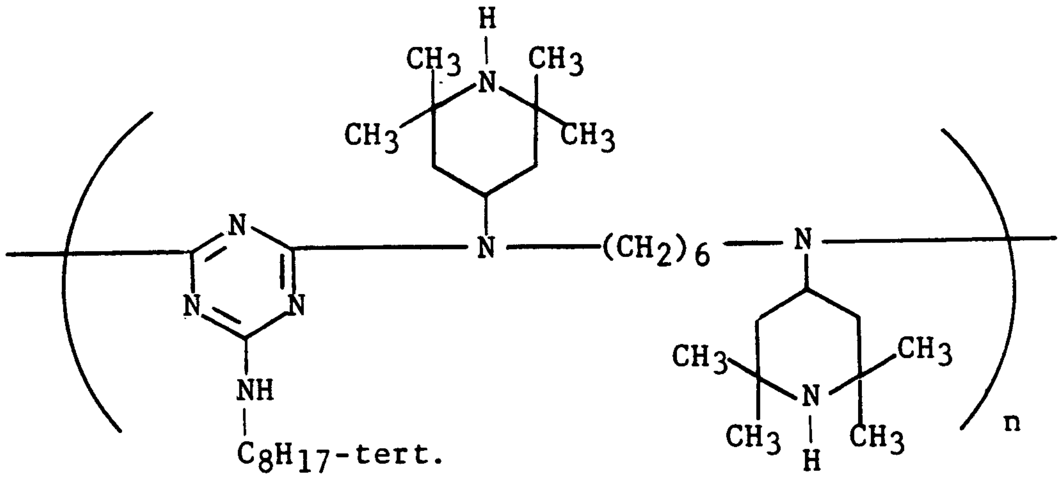

wherein n is greater than 1.

(c) Another HALS, identified as HALS B in this Example and having the formula:

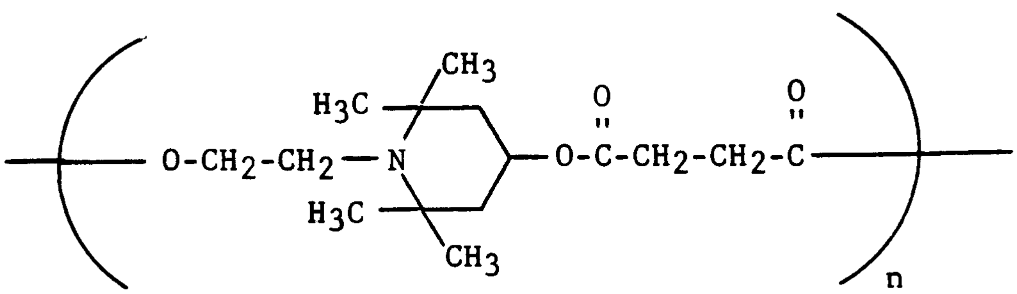

wherein n is greater than 1; and

(d) a U.V. absorber, identified as Absorber 1 which was:

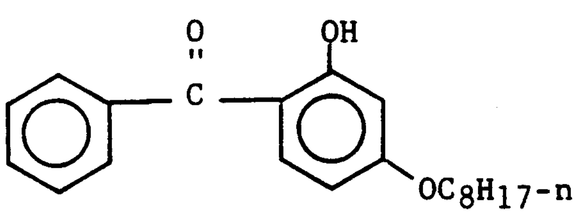

(2-hydroxy-4-n-octyloxybenzophenone)

The particular stabilized films prepared and tested and the stability results obtained are set forth in TABLE 1 as follows:

TABLE 1

EFFECT OF PESTICIDE TREATMENT ON LIGHT STABILITY OF HALS-STABILIZED POLYOLEFIN GREENHOUSE FILMS

| EXAMPLE | A | B | C | D | E | 1 | F |
|---|---|---|---|---|---|---|---|
| STABILIZER, wt % TRS | | | | | | | |
| HALS 1 | .25 | .50 | - | - | - | .25 | - |
| HALS A | - | - | .25 | .50 | - | - | .25 |
| HALS B | - | - | - | - | .50 | - | - |
| ABSORBER 1 | - | - | - | - | - | .25 | .25 |
| FILM STABILITY, hours | | | | | | | |
| UNTREATED | 4917 | >6000 | 5000 | >6000 | 4217 | 8000 | 8000 |
| TREATED | 2200 | 3000 | 2393 | 2886 | 2045 | 5400 | 3800 |

As shown by the data of TABLE 1, exposure to environmental chemicals has a deleterious effect on HALS-stabilized polyolefin films. Examples A-E and F clearly show that the stabilizers tested lost 50% or more of their stabilizing activity after exposure to the environmental chemical in the pesticide. A comparison of Examples 1 and F demonstrates the unexpectedly superior environmental chemical resistance of the stabilizer package of this invention, shown in Example 1, over a very similar combination employing a slightly different HALS shown in Example F. The stabilizer package of Example 1 provided approximately 1 $\frac{1}{2}$ times more hours of stability than the closely related package shown in Example F.

This unexpected property for the stabilizer package of the present invention, as shown by Example 1, is neither appreciated or disclosed in U.S. 4,331,586, which broadly discloses the combination. It is apparent that a substantially colorless, light stable and environmental chemicals stable greenhouse film has been provided.

Although the present invention has been described with reference to certain preferred embodiments, modifications or changes may be made herein, by those skilled in this art. For example, instead of a vinyl acetate modified low density polyethylene, other polyolefins may be used. Instead of polymer films, other shaped articles such as stadium seats, and food and grain containers may be stabilized in accordance with this invention. Instead of 2-hydroxy-4-n-octyloxybenzophenonebeing used as the U.V. absorber component of the stabilizer package, other U.V. absorbers such as other 2-hydroxybenzophenones or 2'-(hydroxyphenyl)benzotriazoles may be substituted, to name but a few. All such obvious modifications may be made herein, by those skilled in this art without departing from the scope and spirit of the present invention as defined by the appended claims.

## Claims

**1.** An environmental chemicals resistant stabilizer package for stabilizing thermoplastic substrates against UV induced photodegradation, said environmental chemicals resistant stabilizer package comprising:

(a) a hindered amine light stabilizer comprising an oligomer of the formula:

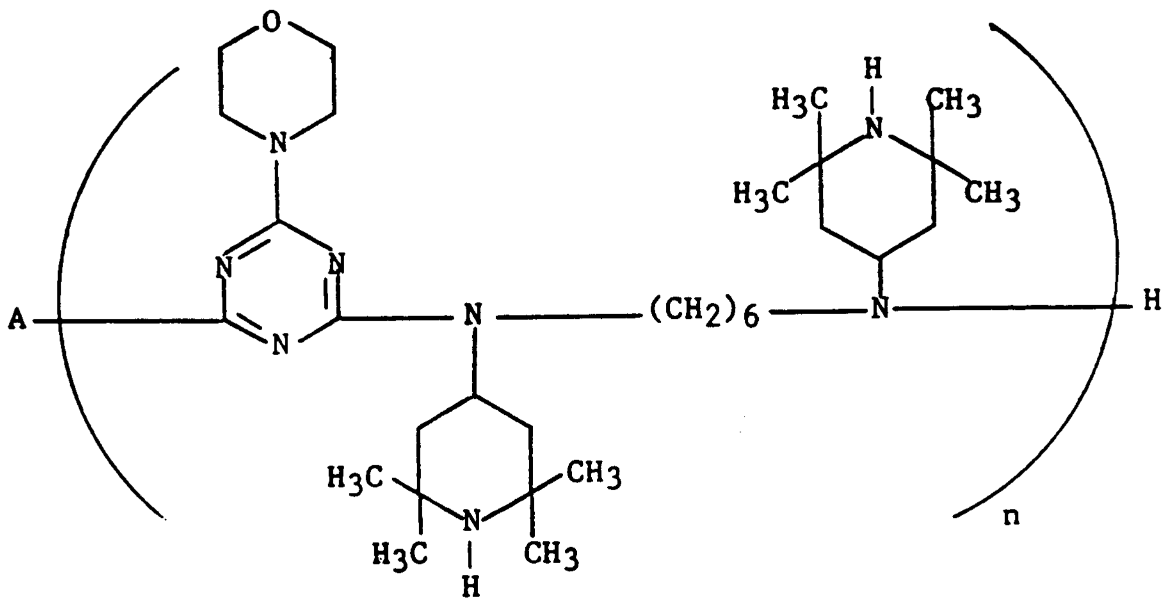

wherein A represents a halogen, $C_1$-$C_8$ alkylamino, di($C_1$-$C_8$)alkylamino, pyrrolidyl or a morpholino group and n is an integer greater than 1; and

(b) an ultraviolet absorber, wherein the weight ratio of (a) to (b) in said stabilizer package is from 1:5 to 5:1, respectively.

**2.** An environmental chemicals resistant stabilizer package as recited in Claim 1 wherein in component (a) A is a morpholino group and n is 2 to 3, inclusive.

**3.** An environmental chemicals resistant stabilizer package as recited in Claim 1, wherein UV absorber component (b) is selected from a hydroxyphenyl benzotriazole, hydroxybenzophenone, acrylate or oxalic acid diamide UV absorbers.

**4.** An environmental chemicals resistant stabilizer package as recited in Claim 1, wherein component (b) comprises 2-hydroxy-4-n-octyloxybenzophenone.

**5.** A method for stabilizing a thermoplastic polymer which is subject to exposure to environmental chemicals, said method comprising:

providing a thermoplastic polymer which is normally subject to degradation by ultraviolet radiation; and

treating said polymer with an ultraviolet stabilizingly effective amount of an environmental chemicals resistant stabilizer package comprising:

(a) a hindered amine light stabilizer comprising an oligomer of the formula:

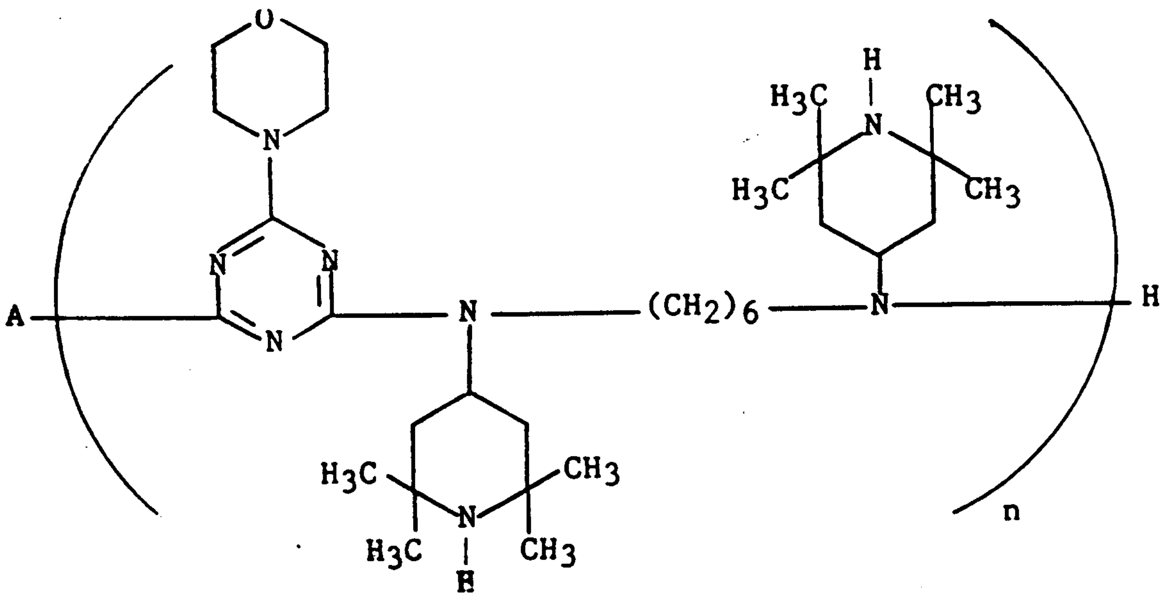

wherein A represents a halogen, $C_1$-$C_8$ alkylamino, di($C_1$-$C_8$)alkylamino, pyrrolidyl or a morpholino group and n is an integer greater than 1; and

(b) an ultraviolet absorber, wherein the weight ration of (a) to (b) in said stabilizer package is from 1:5 to 5:1, respectively.

**6.** A method as recited in Claim 5, wherein the polymer is treated by incorporating the stabilizer package into the polymer, or by applying the stabilizer package to the surface of the polymer.

**7.** A method as recited in Claim 5 wherein the thermoplastic polymer is selected from polyolefin, polyester, polycarbonate, polyether, polyurethane and polystyrene polymers.

**8.** A method as recited in Claim 5, wherein the thermoplastic polymer comprises a polyolefin or a vinyl acetate modified low density polyethylene.

**9.** An environmental chemicals resistant light stabilized article comprising:

a polyolefin; and

from 0.1 to 6.0% by weight, based on total resin solids of an environmental chemicals resistant stabilizer package, said stabilizer package comrpising:

(a) a hindered amine light stabilizer comprising an oligomer of the formula:

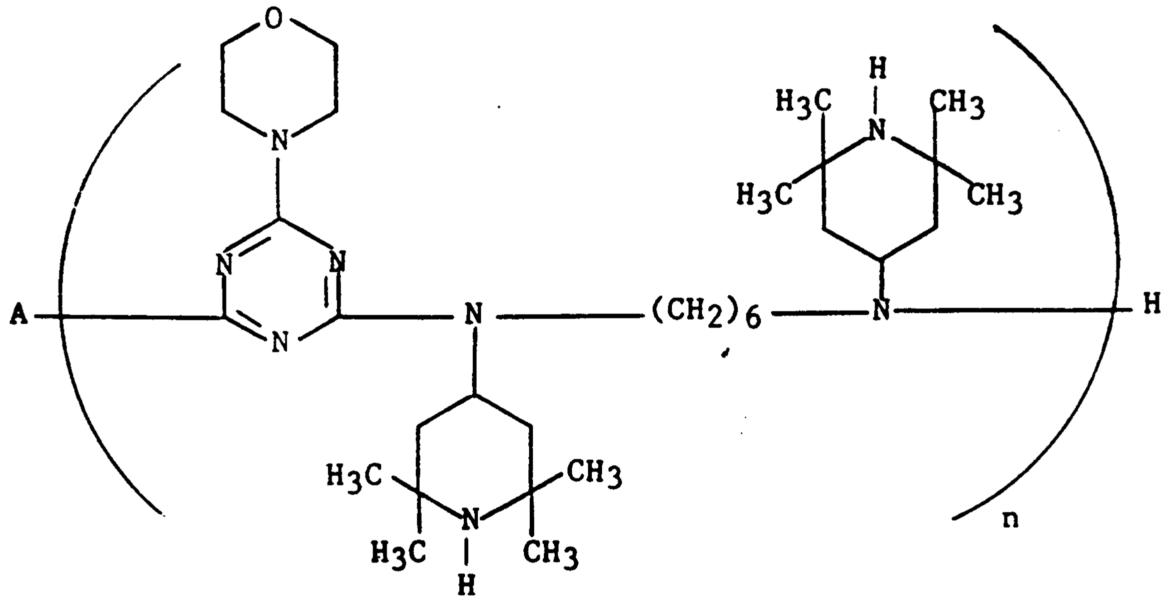

wherein A represents a halogen, $C_1$-$C_8$ alkylamino, di($C_1$-$C_8$)alkylamino, pyrrolidyl or a morpholino group and n is an integer greater than 1; and

(b) an ultraviolet absorber, wherein the weight ratio of (a) to (b) in said stabilizer package is from 1:5 to 5:1, respectively.

**10.** A stabilized article as recited in Claim 9 in the form of a greenhouse film and wherein the UV absorber is 2-hydroxy-4-n-octyloxybenzophenone.

**Revendications**

**1.** Système stabilisant résistant aux produits chimiques de l'environnement destiné à stabiliser des substrats thermoplastiques contre une photodégradation provoquée par le rayonnement ultraviolet, ledit système stabilisant résistant aux produits chimiques de l'environnement comprenant :

(a) un stabilisant à la lumière du type amine à empêchement stérique comprenant un oligomère de formule :

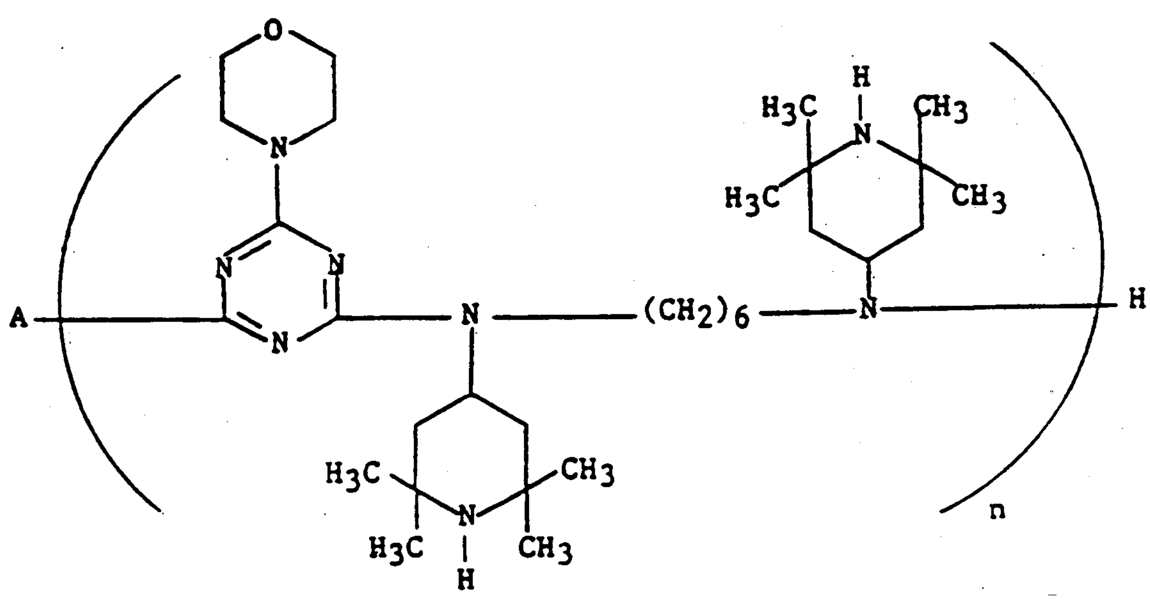

où A représente un halogène, un groupe alkylamino en $C_1$-$C_8$,di(alkyle en $C_1$-$C_8$)amino, pyrrolidyle ou morpholino et n est un nombre entier supérieur à 1 ; et

(b) un absorbant d'ultraviolet,
le rapport en poids de (a) à (b) dans ledit système stabilisant étant de 1:5 à 5:1, respectivement.

**2.** Système stabilisant résistant aux produits chimiques de l'environnement selon la revendication 1, dans lequel, dans le composant (a), A est un groupe morpholino et n est de 2 à 3 inclusivement.

**3.** Système stabilisant résistant aux produits chimiques de l'environnement selon la revendication 1, dans lequel le composant absorbant d'ultraviolet (b) est choisi parmi des absorbants d'ultraviolet des types hydroxyphénylbenzotriazole, hydroxybenzophénone, acrylate ou diamide d'acide oxalique.

**4.** Système stabilisant résistant aux produits chimiques de l'environnement selon la revendication 1, dans lequel le composant (b) comprend la 2-hydroxy-4-*n*-octyloxybenzophénone.

**5.** Procédé pour stabiliser un polymère thermoplastique qui est soumis à une exposition à des produits chimiques de l'environnement, ledit procédé consistant à :
obtenir un polymère thermoplastique qui est normalement sensible à une dégradation par le rayonnement ultraviolet ; et
traiter ledit polymère par une quantité efficace pour la stabilisation au rayonnement ultraviolet d'un système stabilisant résistant aux produits chimiques de l'environnement comprenant :
(a) un stabilisant à la lumière du type amine à empêchement stérique comprenant un oligomère de formule :

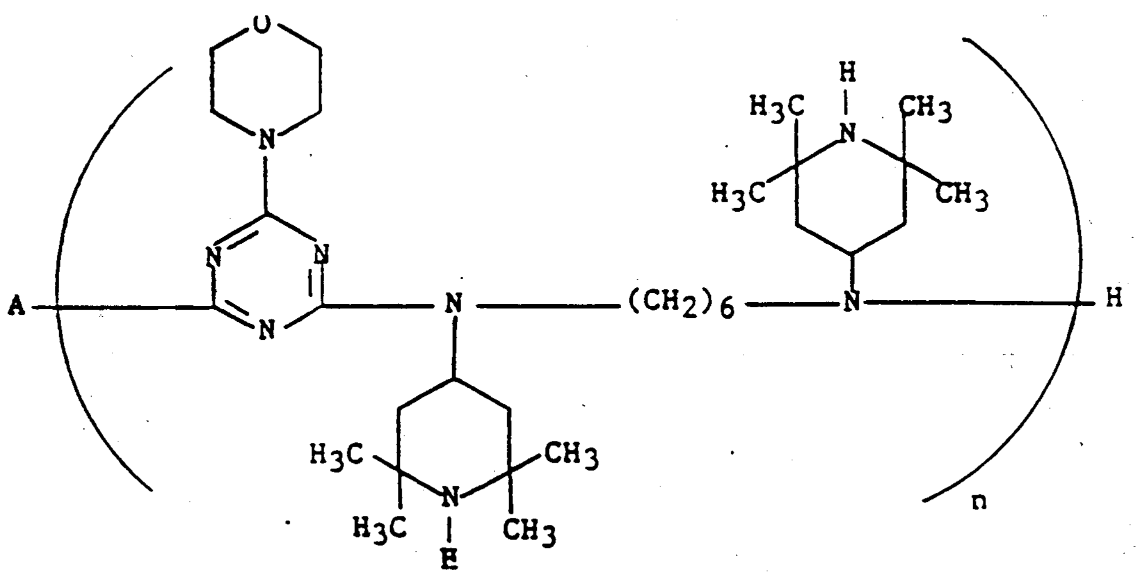

où A représente un halogène, un groupe alkylamino en $C_1$-$C_8$,di(alkyle en $C_1$-$C_8$)amino, pyrrolidyle ou morpholino et n est un nombre entier supérieur à 1 ; et
(b) un absorbant d'ultraviolet,
le rapport en poids de (a) à (b) dans ledit système stabilisant étant de 1:5 à 5:1, respectivement.

**6.** Procédé selon la revendication 5, dans lequel le polymère est traité par incorporation du système stabilisant au polymère ou par application du système stabilisant à la surface du polymère.

**7.** Procédé selon la revendication 5, dans lequel le polymère thermoplastique est choisi parmi les polymères de types polyoléfine, polyester, polycarbonate, polyéther, polyuréthanne et polystyrène.

**8.** Procédé selon la revendication 5, dans lequel le polymère thermoplastique comprend une polyoléfine ou un polyéthylène basse densité modifié par l'acétate de vinyle.

**9.** Article stabilisé à la lumière résistant aux produits chimiques de l'environnement comprenant :
une polyoléfine ; et

0,1 à 6,0 % en poids, sur la base des matières solides de résine totales, d'un système stabilisant résistant aux produits chimiques de l'environnement, ledit système stabilisant comprenant :

(a) un stabilisant à la lumière du type amine à empêchement stérique comprenant un oligomère de formule :

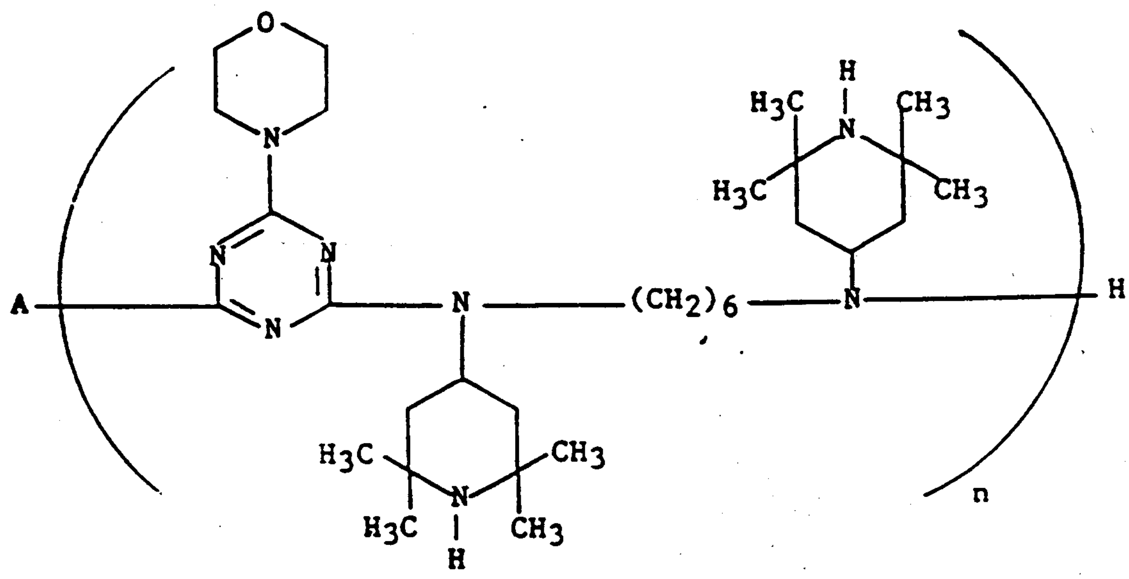

où A représente un halogène, un groupe alkylamino en $C_1$-$C_8$,di(alkyle en $C_1$-$C_8$)amino, pyrrolidyle ou morpholino et n est un nombre entier supérieur à 1 ; et

(b) un absorbant d'ultraviolet,

le rapport en poids de (a) à (b) dans ledit système stabilisant étant de 1:5 à 5:1, respectivement.

**10.** Article stabilisé selon la revendication 9, sous la forme d'une pellicule de serre et dans lequel l'absorbant d'ultraviolet est la 2-hydroxy-4-*n*-octyloxybenzophénone.

**Patentansprüche**

**1.** Eine gegen Umweltchemikalien resistente Stabilisatorpackung zur Stabilisierung von thermoplastischen Substraten gegen UV-induzierte Photobeeinträchtigung, wobei die gegen chemischen Angriff resistente Stabilisatorpackung umfaßt:

(a) Einen gehinderten Amin-Lichtstabilisator, umfassend ein Oligomeres der Formel:

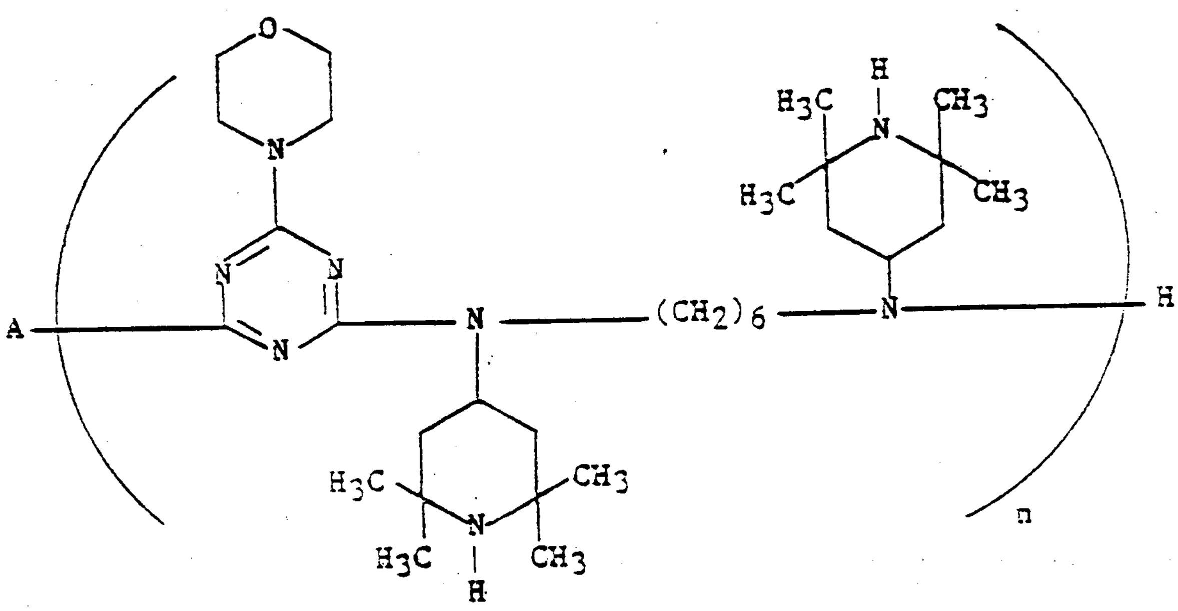

wobei A für ein Halogen, $C_1$-$C_8$-Alkylamino, Di($C_1$-$C_8$)alkylamino, Pyrrolidyl oder eine Morpholinogruppe steht und n eine ganze Zahl größer als 1 ist; und
(b) Einen Ultraviolettabsorber, wobei das Gewichtsverhältnis von (a) zu (b) in der erwähnten Stabilisatorpackung von 1:5 bis 5:1 beträgt.

**2.** Eine gegen Umweltchemikalien resistente Stabilisatorpackung, wie sie in Anspruch 1 angegeben ist, wobei in Komponente (a) A eine Morpholinogruppe ist und n 2 bis einschließlich 3 ist.

**3.** Eine gegen Umweltchemikalien resistente Stabilisatorpackung, wie sie in Anspruch 1 angegeben ist, wobei die UV-Absorberkomponente (b) ausgewählt ist aus einem Hydroxyphenylbenzotriazol, Hydroxybenzophenon, Acrylat- oder Oxalsäurediamid-UV-Absorbern.

**4.** Eine gegen Umweltchemikalien resistente Stabilisatorpackung, wie sie in Anspruch 1 angegeben ist, wobei Komponente (b) 2-Hydroxy-4-n-octyloxybenzophenon umfaßt.

**5.** Verfahren zur Stabilisierung eines thermoplastischen Polymeren, welches dem Angriff von Umweltchemikalien ausgesetzt ist, wobei das erwähnte Verfahren umfaßt:
Zurverfügungstellung eines thermoplastischen Polymeren, welches normalerweise einer Beeinträchtigung durch ultraviolette Strahlung unterliegt; und
Behandlung des Polymeren mit einer zur Ultraviolettstabilisierung wirksamen Menge einer gegen Umweltchemikalien resistenten Stabilisatorpackung, umfassend:
(a) Einen gehinderten Amin-Lichtstabilisator, umfassend ein Oligomeres der Formel:

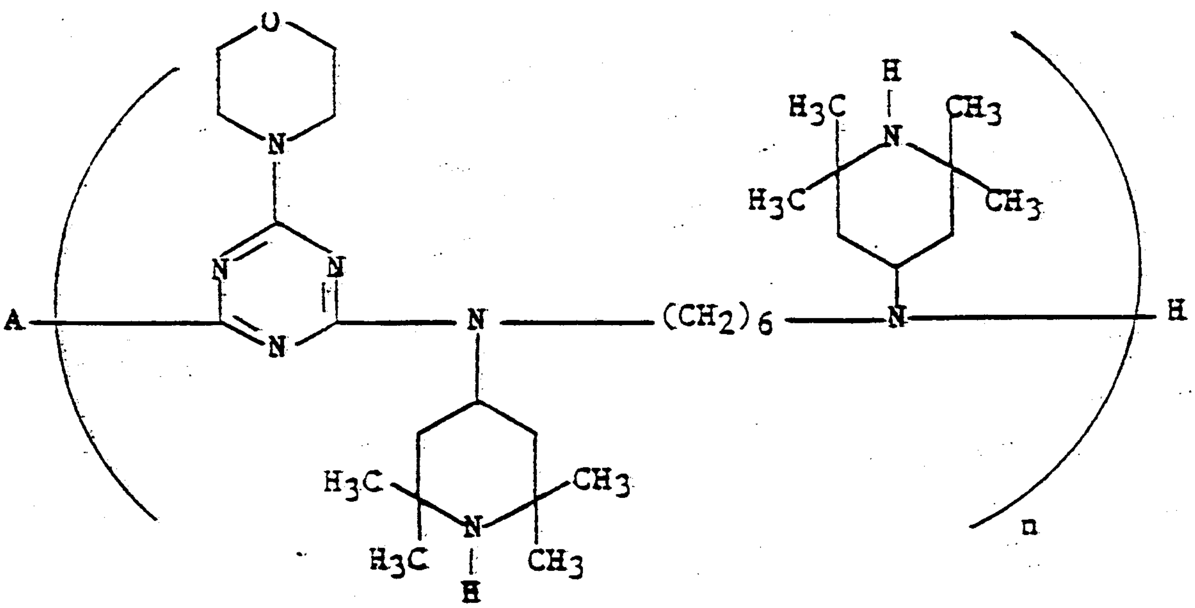

wobei A für ein Halogen, $C_1$-$C_8$-Alkylamino, Di($C_1$-$C_8$)alkylamino, Pyrrolidyl oder eine Morpholinogruppe steht und n eine ganze Zahl größer als 1 ist; und
(b) Einen Ultraviolettabsorber, wobei das Gewichtsverhältnis von (a) zu (b) in der erwähnten Stabilisatorpackung von 1:5 bis 5:1 beträgt.

**6.** Verfahren wie in Anspruch 5 angegeben, wobei das Polymere behandelt wird, indem man die Stabilisatorpackung dem Polymeren einverleibt oder indem man die Stabilisatorpackung auf die Oberfläche des Polymeren appliziert.

**7.** Verfahren wie in Anspruch 5 angegeben, wobei das thermoplastische Polymere ausgewählt ist unter Polyolefin-, Polyester-, Polycarbonat-, Polyether-, Polyurethan- und Polystyrolpolymeren.

**8.** Verfahren wie in Anspruch 5 angegeben, wobei das thermoplastische Polymere ein Polyolefin oder ein Vinylacetat-modifiziertes Polyethylen niedriger Dichte umfaßt.

**9.** Ein gegen Umweltchemikalien resistenter, lichtstabilisierter Gegenstand, umfassend ein Polyolefin; und von 0,1 bis 6,0 Gew.-%, bezogen auf die Gesamtharzfeststoffe, einer gegen Umweltchemikalien resistenten Stabilisatorpackung, wobei die Stabilisatorpackung umfaßt:

(a) Einen gehinderten Amin-Lichtstabilisator, umfassend ein Oligomeres der Formel:

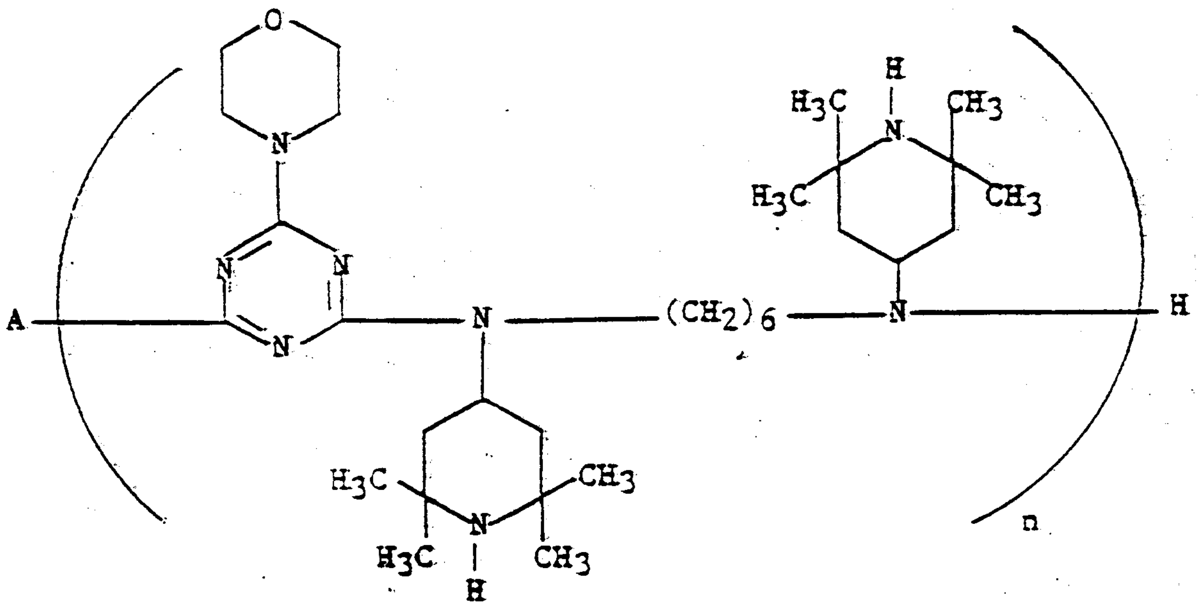

wobei A für ein Halogen, $C_1$-$C_8$-Alkylamino, Di($C_1$-$C_8$)alkylamino, Pyrrolidyl oder eine Morpholinogruppe steht und n eine ganze Zahl größer als 1 ist; und

(b) Einen Ultraviolettabsorber, wobei das Gewichtsverhältnis von (a) zu (b) in der erwähnten Stabilisatorpackung von 1:5 bis 5:1 beträgt.

**10.** Ein stabilisierter Gegenstand, wie in Anspruch 9 angegeben, in der Form einer Gewächshausfolie und wobei der UV-Absorber 2-Hydroxy-4-n-octyloxybenzophenon.